# EUROPÄISCHE PATENTSCHRIFT

(11) **EP 1 729 584 B1**
(45) Veröffentlichungstag und Bekanntmachung des Hinweises auf die Patenterteilung: **14.10.2009**
(21) Anmeldenummer: 05716244.8
(22) Anmeldetag: 19.03.2005
(51) Int. Cl.: A21B 1/26, A21B 1/48

(54) **BACKOFEN**
OVEN
FOUR DE CUISSON

(30) Priorität: 02.04.2004 DE 102004016998
(43) Veröffentlichungstag der Anmeldung: 13.12.2006
(73) Patentinhaber: Werner & Pfleiderer Industrielle Backtechnik GmbH, 71732 Tamm (DE)
(72) Erfinder: RUDELMANN, Gerhard, 71299 Wimsheim (DE)
(74) Vertreter: Hofmann, Matthias
(86) Internationale Anmeldenummer: PCT/EP2005/002963
(87) Internationale Veröffentlichungsnummer: WO 2005/096826

(56) Entgegenhaltungen:
- EP-A- 0 736 253
- AU-B2- 451 611
- DE-C- 812 130
- FR-A- 2 425 804
- GB-A- 982 775
- US-A- 1 657 959
- US-A- 5 475 958
- US-A- 5 875 705

## Beschreibung

Die Erfindung betrifft einen Backofen nach dem Oberbegriff des Anspruchs 1.

Ein derartiger Backofen ist aus der AU 451 611 B2 bekannt. Die Verbindung der Kanalabschnitte aneinander, aus denen der Führungskanal eines derartige Ofens zusammengesetzt ist, ist bei den bekannten Backofen aufwändig.

Aus der GB 982 775 A ist eine Verbindung zweier Gebäude-Fassaden-elemente über Verbindungslippen bekannt.

Aus der EP0736253 A ist ein Backofen gemäß dem Oberbegriff des Schutzanspruchs 1 bekannt.

Es ist eine Aufgabe der vorliegenden Erfindung, einen Backofen der eingangs genannten Art derart weiterzubilden, dass die Montage der Kanalabschnitte des Führungskanals vereinfacht ist.

Diese Aufgabe ist erfindungsgemäß gelöst durch einen Backofen mit den Merkmalen des Kennzeichnungsteils des Anspruchs 1.

Bei der erfindungsgemäßen Verbindung stirnseitig aneinander angrenzender Endbereiche führt der wechselweise Eingriff der Verbindungslaschen in die Aufnahmezonen zu einer ohne weitere Verbindungsteile ausreichenden Strömungsverbindung. Die Laschen und die Aufnahmezonen können als einteilig an die Kanalabschnitte angeformte Elemente ausgebildet sein. Dies kann zum Beispiel durch Stanzen oder durch eine andere formende Bearbeitung, zum Beispiel durch Laserschneiden, geschehen. Insgesamt ist eine kostengünstige Fertigung der Verbindungseinrichtung möglich. Insgesamt kann eine separate Montage des Führungskanals entfallen. Die erfindungsgemäße Ausgestaltung der Verbindungslaschen erleichtert das Ansetzen der die Verbindungslaschen und die Aufnahmezonen aufweisenden Endbereiche der Kanalabschnitte aneinander. Hierdurch ist eine weitere Montagevereinfachung gegeben.

Führungs und Verbindungsnuten nach Anspruch 1 erhöhen den Zusammenhalt der Verbindungseinrichtung. Durch die Führungs- und Verbindungsnuten erhält die Verbindung zwischen den Verbindungslaschen und den Aufnahmezonen zudem Spiel, so dass eine die Dichtigkeit reduzierende plastische Verformung der stirnseitigen Endbereiche der Kanalabschnitte vermieden ist.

Ein Klemmabschnitt nach Anspruch 2 führt nach erfolgter Montage zu einer sicheren Verbindung der beiden stirnseitig über die Verbindungseinrichtung aneinander angrenzenden Kanalabschnitte.

Eine Ausgestaltung der Verbindungslasche nach Anspruch 3 erleichtert das Ansetzen der stirnseitigen Endbereiche der Kanalabschnitte aneinander zusätzlich.

Eine Dimensionierung der Führungs- und Verbindungsnuten nach Anspruch 4 nimmt eine Temperaturausdehnung der Kanalabschnitte im Bereich der stirnseitig aneinander angrenzenden Endbereiche auf. Insbesondere unterschiedliche Temperaturausdehnungen zwischen dem Ofenkörper und dem Führungskanal können auf diese Weise aufgenommen werden. Die Dimensionierung der Führungs- und Verbindungsnuten kann auf die Dimensionierung der Verbindungslaschen und der Aufnahmezonen so abgestimmt sein, dass sich die Dichtigkeit des Führungskanals im Bereich der stirnseitig aneinander angrenzenden Kanalabschnitte bei steigender Temperatur erhöht.

Ein Backofen nach Anspruch 5 lässt sich flexibel planen und erweitern.

Eine Verbindungseinheit nach Anspruch 6, die z. B. als Verschraubung zwischen den Ofenmodulen gestaltet sein kann, führt zu einem sicheren Zusammenhalt des modular aufgebauten Backofens.

Durch die Ausgestaltung der Verbindungseinrichtung nach Anspruch 7 wird die Flexibilität bei der möglichen Anordnung der Ofenmodule zueinander weiter erhöht je nach Platzbedarf beziehungsweise externen Anschlussgegebenheiten kann die Orientierung eines bestimmten Ofenmoduls angepasst werden.

Ein Ausführungsbeispiel der Erfindung wird nachfolgend anhand der Zeichnung näher erläutert. In dieser zeigen:
- Fig. 1: eine Seitenansicht eines erfindungsgemäßen, modular aufgebauten Backofens;
- Fig. 2: eine schematische Ausschnittsvergrößerung aus Fig. 1, welche interne Details zur Umlufterzeugung und - führung im Backofen darstellt, in einem Strahlungs-Modus;
- Fig. 3: eine zu Fig. 2 ähnliche Darstellung des Backofens in einem Konvektions-Modus;
- Fig. 4: einen vergrößerten Schnitt gemäß Linie IV-IV in Fig. 2;
- Fig. 5: eine Aufsicht auf einen oberen Zuführ-Kanalabschnitt eines Führungskanals zur Umluftführung im Backofen nach Fig. 1 bis 4, der oben an einen Backraum des Backofens angrenzt;
- Fig. 6: eine Seitenansicht des Zuführ-Kanalabschnitts nach Fig. 5;
- Fig. 7: eine Aufsicht auf einen unteren Zuführ-Kanalabschnitt eines Führungskanals zur Umluftführung im Backofen nach Fig. 1 bis 4, der unten an einen Backraum des Backofens angrenzt;
- Fig. 8: eine Seitenansicht des Zuführ-Kanalabschnitts nach Fig. 7;
- Fig. 9: eine Aufsicht auf Endbereiche aneinander angrenzender Zuführ-Kanalabschnitte zweier stirnseitig benachbarter Ofenmodule des Backofens; und
- Fig. 10a bis d: Momentanpositionen der Verbindungslaschen tragenden Endbereiche der nach Fig. 9 aneinander angrenzenden Zuführ-Kanalabschnitte während der Montage der beiden Ofenmodule aneinander.

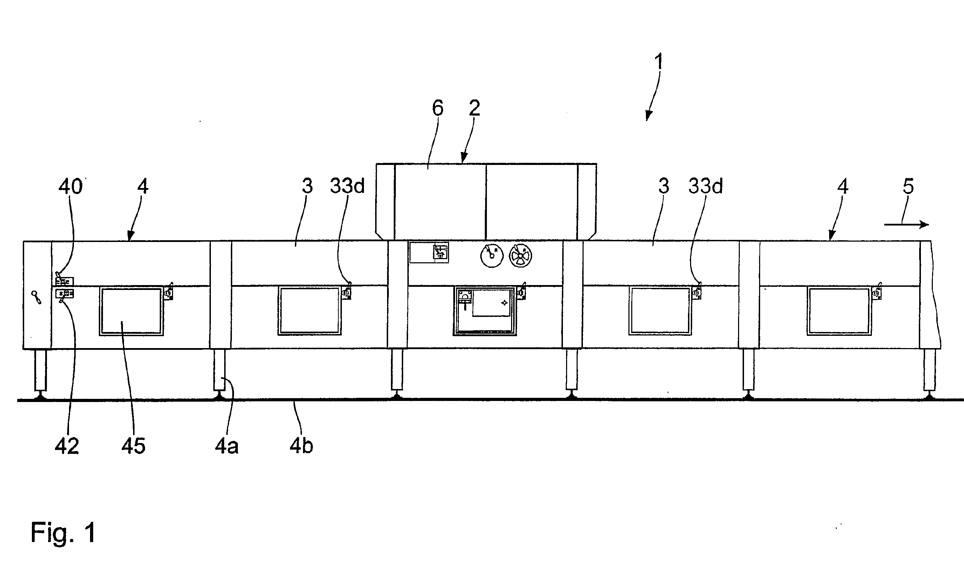

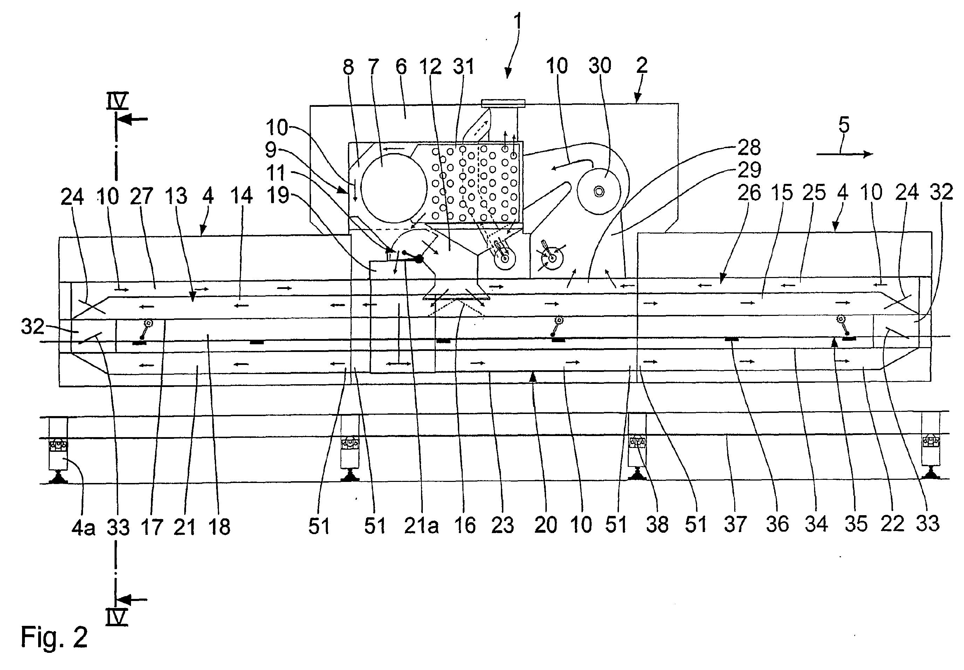

Fig. 1 zeigt eine Gesamt-Seitenansicht eines Durchlauf-Backofens 1, mit dem zum Beispiel Dauerbackgebäck in Form von Weichkeksen, Hartkeksen oder Laugengebäck produziert werden können. Auch andere Lebensmittel können im Backofen verarbeitet werden. Mit dem Backofen 1 ist auch ein Rösten und als Spezialanwendung auch ein Trocknen oder Sterilisieren möglich. Der Backofen 1 ist in insgesamt fünf Ofenmodule unterteilt, die zunächst als separate Module vorliegen und beim Zusammenbau des Backofens 1 miteinander verbunden werden. Das mittlere Ofenmodul ist ein Heizmodul 2, in welchem Umluft zum Heizen des Backofens 1 erzeugt wird. In Fig. 1 rechts und links des Heizmoduls 2 weist der Backofen 1 zwei Verlängerungsmodule 3 auf, welche die vom Heizmodul 2 erzeugte Umluft führen. Rechts und links endseitig abgeschlossen ist der Backofen 1 von zwei Zonenendmodulen 4, welche einen Heizkreislauf für die Umluft rechts- und linksseitig abschließen. Die Module 2 bis 4 stützen sich über Standfüße 4a auf einem Maschinenboden 4b ab. Die Verlängerungsmodule 3 stellen eine Verbindung zwischen dem Heizmodul 2 und den Zonenendmodulen 4 her. Es können prinzipiell mehrere derartige Verlängerungsmodule 3 direkt hintereinander angeordnet sein. Die Verlängerungsmodule 3 können natürlich, je nach Anforderungen an den Backofen 1, auch entfallen. Auch mehrere Heizmodule 2 können beim Backofen 1 vorgesehen sein. Die Ofenmodule 2 bis 4 weisen längs einer durch einen Pfeil 5 angedeuteten Förderrichtung 5 die gleiche Länge und quer zur Förderrichtung 5 die gleiche Breite auf. Zu backende Teiglinge treten in das in Fig. 1 linksseitige Zonenendmodul 4 ein, durchlaufen den Backofen 1 längs der Förderrichtung 5 und treten fertig gebacken aus dem in Fig. 1 rechtsseitigen Zonenendmodul 4 wieder aus. Fig. 2 zeigt eine vergrößerte Darstellung des Backofens 1 mit zusätzlichen internen Details. Der Übersichtlichkeit halber sind in Fig. 2 die beiden Verlängerungsmodule 3 weggelassen.

In einem Aufsatz 6 des Heizmoduls 2 ist ein als Heizquelle dienender Brenner 7 untergebracht, welcher Umluft 8, die in einem Führungskanal 9 innerhalb des Backofens 1 geführt ist, erhitzt. Den Weg der Umluft 8 längs des Führungskanals 9 verdeutlichen Strömungsrichtungspfeile 10. Stromabwärts des Brenners 7 weist der Führungskanal 9 einen Verteiler-Kanalabschnitt 11 auf. Über einen Zuführstutzen 12 verbindet der Verteiler-Kanalabschnitt 11 den Brennerbereich des Führungskanals 9 mit einem oberen rohrförmigen Zuführ-Kanalabschnitt 13. Letzterer ist zu einer in Fig. 2 mittig vertikalen und auf der Zeichenebene der Fig. 2 senkrechten Ebene spiegelsymmetrisch in zwei Zuführ-Unterabschnitte 14, 15 unterteilt. Der Zuführ-Unterabschnitt 14 ist dabei in Fig. 2 links des Zuführstutzens 12 und der Zuführ-Unterabschnitt 15 rechts des Zuführstutzens 12 angeordnet. Der Zuführstutzen 12 dient zusammen mit einem diesem in Stromrichtung der Umluft 8 unmittelbar nachgeordneten und im Querschnitt der Fig. 2 konischen Luftleitblech 16 zur Y-Verteilung der Umluft in die beiden Zuführ-Unterabschnitte 14, 15. Der Zuführ-Kanalabschnitt 13 grenzt über eine Grenzwand 17 an einen darunter liegenden Backraum 18 des Backofens 1 an. Der Zuführ-Kanalabschnitt 13 erstreckt sich längs des gesamten Backofens 1, setzt sich also über die aneinander angrenzenden Ofenmodule 2 bis 4 fort.

Der Verteiler-Kanalabschnitt 11 weist ferner einen Verbindungsstutzen 19 auf. Über diesen steht der Brennerbereich des Führungskanals 9 mit einem unteren rohrförmigen Zuführ-Kanalabschnitt 20 unterhalb des Backraums 18 in Verbindung. Letzterer ist wie der obere Zuführ-Kanalabschnitt 13 in zwei spiegelsymmetrisch zueinander angeordnete Zuführ-Unterabschnitte 21, 22 verteilt und erstreckt sich ebenfalls längs des gesamten Backofens 1. Der Zuführ-Kanalabschnitt 20 steht über eine obere Grenzwand 23 mit dem Backraum 18 in Verbindung.

Über eine Umschaltklappe 21 a im Verteiler-Kanalabschnitt 11 lässt sich vorgeben, ob mit diesem eine Umluftverbindung nur hin zum oberen Zuführ-Kanalabschnitt 13, nur hin zum unteren Zuführ-Kanalabschnitt 20 oder aber zu beiden Zuführ-Kanalabschnitten 13, 20 geschaffen wird. Auf diese Weise lässt sich zwischen Oberhitze, Unterhitze und kombinierter Ober- und Unterhitze wählen.

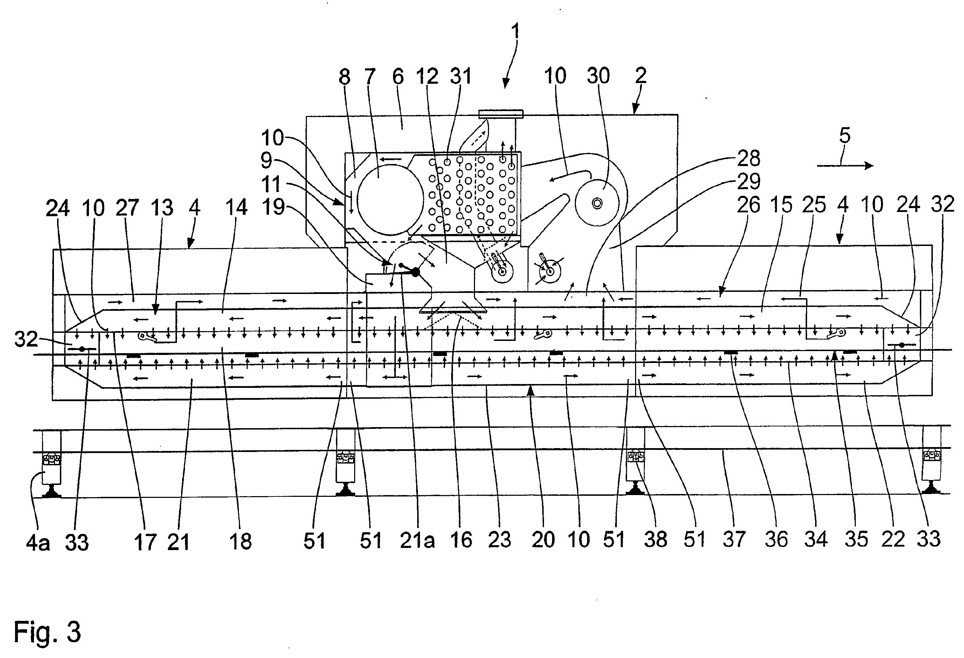

Nachfolgend wird die Luftführung der Umluft 8 in den Zonenendmodulen 4 beschrieben. Hierbei wird nur die Luftführung im in Fig. 2 rechten Zonenendmodul 4 beschrieben, da das in Fig. 2 linke Zonenendmodul 4 identisch aufgebaut und gegenüber dem in Fig. 2 rechten Zonenendmodul 4 um 180° um die Hochachse gedreht angeordnet ist. An seinem in Fig. 2 rechten Ende weist der Zuführ-Unterabschnitt 15 des Zuführ-Kanalabschnitts 13 ein Drosselelement in Form einer Drosselklappe 24 auf. Diese ist in Fig. 2 in einer Offenstellung dargestellt. Die Drosselklappe 24 ist um eine horizontale Achse zwischen der Offenstellung und einer in Fig. 3 dargestellten Schließstellung schwenkbar. In letzterer verschließt die Drosselklappe 24 das in Fig. 2 rechte Ende des Zuführ-Unterabschnitts 15. In der Offenstellung ist über die Drosselklappe 24 der Zuführ-Unterabschnitt 15 mit einem Rückführ-Unterabschnitt 25 eines rohrförmigen Rückführ-Kanalabschnittes 26 des Führungskanals 9 verbunden. Dieser verläuft oberhalb des Zuführ-Kanalabschnitts 13. Ein entsprechend zum Rückführ-Unterabschnitt 25 symmetrischer Rückführ-Unterabschnitt 27 ist im in Fig. 2 linken Zonenendmodul 4 angeordnet. Die beiden Rückführ-Unterabschnitte 25, 27 stehen mit einem mittleren Rückführ-Unterabschnitt 28 im Heizmodul 2 in Verbindung. Letzteres ist mit einem Rückführstutzen 29 im Aufsatz 6 des Heizmoduls 2 verbunden. Im Rückführstutzen 29 läuft ein Umwälzventilator 30. Stromabwärts von diesem mündet der Rückführstutzen 29 in einen Wärmetauscher 31. Letzterer ist wiederum mit dem Brennerbereich des Führungskanals 9 verbunden, so dass über den Führungskanal 9 insgesamt ein Umluft- bzw. Heizkreislauf bereitgestellt ist.

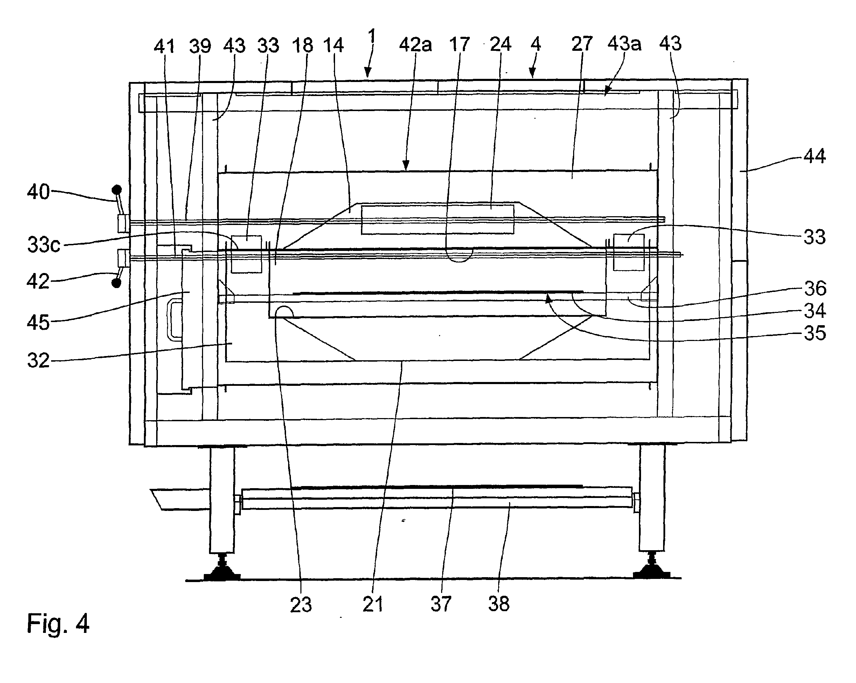

Über einen Verbindungs-Kanalabschnitt 32 steht der untere Zuführ-Unterabschnitt 22 des in Fig. 2 rechten Zonenendmoduls 4 mit dem Rückführ-Unterabschnitt 25 von diesem in Verbindung. Über einen entsprechenden Verbindungs-Kanalabschnitt 32 steht der untere Zuführ-Unterabschnitt 21 des in Fig. 2 linken Zonenendmoduls 4 mit dem Rückführ-Unterabschnitt 27 von diesem in Verbindung. Damit sind auch die unteren Zuführ-Abschnitte 21, 22 an den über den Führungskanal 9 bereitgestellten Umluftkreislauf angeschlossen. Im Verbindungs-Kanalabschnitt 32 sind als Drosselelemente weitere Drosselklappe 33 angeordnet, von denen in Fig. 2 eine in einer Offenstellung dargestellt ist. Die Drosselklappe 33 ist um eine senkrecht auf der Zeichenebene der Fig. 2 stehende Achse zwischen der Offenstellung und einer Schließstellung schwenkbar, in welcher sie den Verbindungs-Kanalabschnitt 33 verschließt. Diese Schließstellung ist in Fig. 3 dargestellt. Der Verbindungs-Kanalabschnitt 32, der den Zuführ-Unterabschnitt 21 mit dem Rückführ-Unterabschnitt 27 verbindet, ist zu einer Mittelebene spiegelsymmetrisch, die in Fig. 4 vertikal senkrecht zur Zeichenebene verläuft. Zwei Drosselklappen 33 sind daher im Verbindungs-Kanalabschnitt 32 in Fig. 4 rechts und links des Backraums 18 angeordnet. Insgesamt hat der Backofen 1 nach Fig. 1 bis 3 vier Drosselklappen 33.

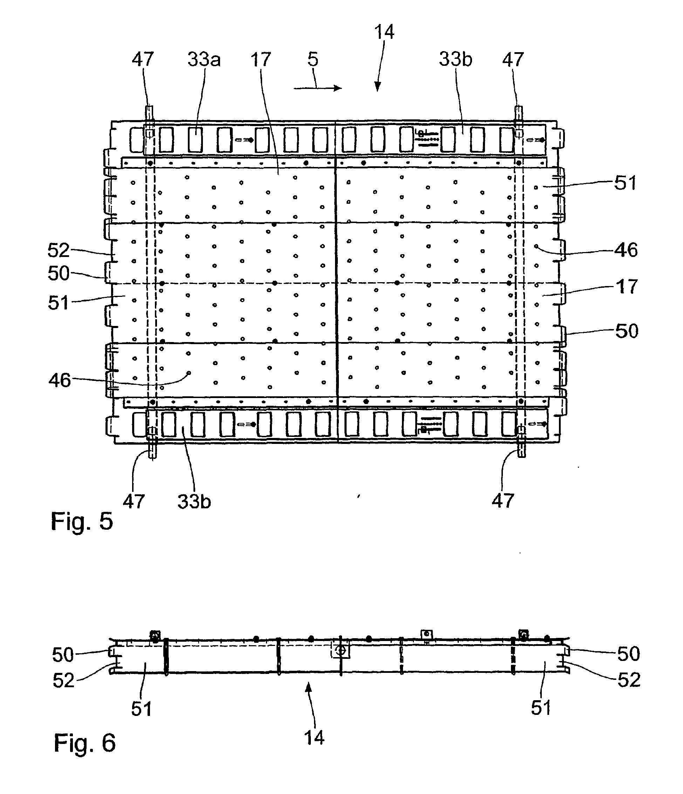

Der Backraum 18 steht mit dem Rückführ-Kanalabschnitt 26 direkt über Verbindungsöffnungen 33a in Verbindung. Letztere sind in Zwischenwänden 33b ausgeführt, welche beiderseits des Zuführ-Kanalabschnitts 13 an diesen angeformt sind. Fig. 5 zeigt den Zuführ-Unterabschnitt 14 mit den seitlichen Zwischenwänden 33b. Die Zwischenwände 33b fluchten in Förderrichtung 5 mit Verschlusswänden 33c in den Verbindungs-Kanalabschnitten 32, welche dann, wenn die Drosselklappen 33 in Schließstellung vorliegen, mit diesen die Verbindungs-Kanalabschnitte 32 verschließend zusammenwirken. Die Zwischenwände 33b stellen seitliche Verlängerungen der oberen Grenzwand 17 dar. Jede der Zwischenwände 33b weist längs der Förderrichtung 5 eine Reihe der nebeneinander angeordneten rechteckigen Verbindungsöffnungen 33a auf. Mit den Zwischenwänden 33b längs der Förderrichtung 5 geführt verbunden ist jeweils ein in der Zeichnung nicht dargestellter Schieber, der in einer Offenstellung so zur ihm zugeordneten Zwischenwand 33b angeordnet ist, dass im Schieber ausgeführte Verbindungsöffnungen mit den Verbindungsöffnungen 33a fluchten. In Offenstellung des Schiebers ist daher ein ungehinderter Durchgang von Umluft durch die Zwischenwände 33b vom Backraum 18 hin zum Rückführ-Kanalabschnitt 26 möglich. Über ein Umlenkgetriebe und eine Betätigungswelle steht jeder Schieber mit einem aus dem jeweiligen Ofenmodul 2 bis 4 nach außen herausgeführten Betätigungshebel 33d in Verbindung. Mit Letzterem kann der Schieber zwischen der Offen- und einer Schließstellung umgestellt werden, in der die Verbindungsöffnungen des Schiebers so zu den Verbindungsöffnungen 33a versetzt angeordnet sind, dass der Schieber die Verbindungsöffnungen 33a vollständig verschließt. In der Schließstellung des Schiebers ist daher kein Durchtritt von Umluft vom Backraum 18 in den Rückführ-Kanalabschnitt 26 möglich. Mit dem Betätigungshebel 33d lassen sich auch Zwischenstellungen des Schiebers zwischen der Offen- und der Schließstellung einstellen. Solange der Schieber geöffnet ist, steht der Backraum 18 mit dem Rückführ-Kanalabschnitt 26 auch bei geschlossenen Drosselklappen 33 in Verbindung.

Ein Querschnitt durch das in Fig. 2 linke Zonenendmodul 4 ist in Fig. 4 dargestellt. Der obere Zuführ-Unterabschnitt 14 und der untere Zuführ-Unterabschnitt 21 sind im Querschnitt trapezförmig. Die beiden Unterabschnitte 14, 21 grenzen dabei über die Grenzwände 17, 23 spiegelsymmetrisch an den Backraum 18 an. Diese Grenzwände 17, 23 stellen gleichzeitig die flächenmäßig größten Seitenwände der Zuführ-Unterabschnitte 14, 21 dar.

Durch den Backraum 18 ist ein Obertrum 34 eines Endlos-Backbandes 35 geführt. Das Obertrum 34 liegt längs des Backraums 18 auf mehreren, voneinander beabstandet in den Ofenmodulen 2 bis 4 angeordneten und als Querstreben ausgebildeten Backbandträgem 36 auf. Das Backband 35 ist durch einen nicht dargestellten Motor so angetrieben, dass das Obertrum 34 in Förderrichtung 5 bewegt ist. Das Obertrum 34 tritt in den Fig. 1 bis 3 linksseitig durch eine nicht dargestellte Zuführöffnung in den Backraum 18 ein und rechtsseitig durch eine ebenfalls nicht dargestellte Abführöffnung aus dem Backraum 18 aus. Rechts und links außerhalb der Zonenendmodule 4 wird das Backband 35 in nicht dargestellter Weise umgelenkt. Ein Untertrum 37 des Backbandes 35 wird unter den Ofenmodulen 2 bis 4 auf weiteren, zwischen den Standfüßen 4a angeordneten Backbandträgern 38 zurückgeführt.

Den Querschnitt nach Fig. 4 sind weitere Details der Anordnung der Drosselklappen 24 und 33 zu entnehmen. Die Drosselklappe 24 ist mit einer Schwenkwelle 39 verbunden, die in den Seitenwänden des Zonenendmoduls 4 gelagert und in Fig. 4 nach links herausgeführt ist. Am dortigen herausgeführten Ende weist die Schwenkwelle 39 einen Betätigungshebel 40 auf, mit dem die Drosselklappe 24 zwischen der Offen- und der Schließstellung umgestellt werden kann. Auch Zwischen-Drosselstellungen zwischen der Offen- und der Schließstellung sind möglich.

Die beiden Drosselklappen 33 sind mit einer gemeinsamen Schwenkwelle 41 verbunden, die in entsprechender Weise wie die Schwenkwelle 39 in Seitenwänden des Zonenendmoduls 4 gelagert ist. Entsprechend zur Schwenkwelle 39 weist auch die Schwenkwelle 41 an ihrem in Fig. 4 linksseitig aus dem Zonenendmodul 4 herausgeführten Ende einen Betätigungshebel 42 auf. Mit diesem können die Drosselklappen 33 zwischen der Offen- und der Schließstellung umgestellt werden. Auch Zwischen-Drosselstellungen zwischen der Offen- und der Schließstellung sind möglich.

Alternativ zu einer manuellen Betätigung ist auch eine angetriebene Betätigung der Schwenkwellen 39, 41 und damit ein angetriebenes, insbesondere automatisches Umstellen der Drosselklappen 24, 33 und gegebenenfalls auch des Schiebers für die Verbindungsöffnungen 33a zwischen der Offenund der Schließstellung möglich. Auch ein angetriebenes Umstellen zwischen verschiedenen Zwischen-Drosselstellungen ist hierdurch möglich.

Im Falle einer automatischen Verlagerung sind die Drosselklappen 24, 33 mit einer zentralen Steuereinrichtung des Backofens 1 verbunden.

Die Zuführ-Unterabschnitte 14, 21, der Rückführ-Unterabschnitt 27 sowie die anderen, innerhalb der Ofenmodule 2 bis 4 angeordneten Komponenten des Führungskanals 9 sind in einem im Querschnitt der Fig. 4 rechteckigen Luftführungsgehäuse 42a angeordnet. Letzteres begrenzt im oberen Abschnitt den Rückführ-Unterabschnitt 27. Das Luftführungsgehäuse 42a ist an Zwischen-Tragstreben 43 des Zonenendmoduls 4 montiert. Die Tragstreben 43 sind Teil einer aus einer Mehrzahl von horizontalen und vertikalen Streben aufgebauten Tragstruktur 43a der Ofenmodule 2 bis 4. Diese Montage des Luftführungsgehäuses 42a ist schwimmend, also derart, dass eine Längenänderung dieser Komponenten des Führungskanals 9 aufgrund einer thermischen Ausdehnung erfolgen kann. Das Zonenendmodul 4 weist wie die anderen Ofenmodule 2, 3 eine wärmedämmende äußere Ofenverkleidung 44 auf. Über eine ebenfalls wärmedämmend verkleidete Zugangstür 45 ist das Innere des Zonenendmoduls 4 zugänglich. Zwischen der Verkleidung der Ofenmodule 2 bis 4 und dem Luftführungsgehäuse 42a ist nicht dargestelltes Dämmmaterial in Form von Isolierwolle eingefügt.

Das Luftführungsgehäuse 42a jedes Ofenmoduls 2 bis 4 weist stirnseitig umlaufende Dichtelemente auf. Über diese sind die Luftführungsgehäuse 42a von benachbarten Ofenmodulen 2 bis 4 derartig zueinander abgedichtet, dass eine Umluftführung zwischen den Luftführungsgehäusen 42a möglich ist, ohne dass Umluft an diesen Stoßstellen die Luftführungsgehäuse 42a nach außen verlassen kann.

Abgesehen von den in Fig. 4 dargestellten Komponenten zu den Drosselklappen 24, 33 haben die Verlängerungsmodule 3 des Backofens 1 einen der Fig. 4 entsprechenden Querschnitt.

Die Fig. 5 bis 10 zeigen Details der Zuführ- bzw. Rückführ-Kanalabschnitte.

Fig. 5 zeigt eine Ansicht des Zuführ-Unterabschnitts 14 des Zuführ-Kanalabschnitts 13 von unten. Die Grenzwand 17 des Zuführ-Unterabschnitts 14 zum Backraum 18 hin weist eine Vielzahl von rasterartig angeordneten Durchgangsöffnungen 46 auf. Über diese steht der Zuführ-Unterabschnitt 14 mit dem Backraum 18 in Verbindung. Die anderen Zuführ-Unterabschnitte des Zuführ-Kanalabschnitts 13 weisen entsprechend rasterartig angeordnete Durchgangsöffnungen 46 auf. Der Strömungswiderstand aller Durchgangsöffnungen 46 des Zuführ-Kanalabschnitts 13 in der Grenzwand 17 zusammen ist größer als der über die Drosselklappen 24 in der Offenstellung vorliegende Strömungswiderstand des Zuführ-Kanalabschnitts 13. Bei in Offenstellung vorliegender Drosselklappe 24 strömt daher die Umluft praktisch ausschließlich über den Zuführ-Unterabschnitt 14 direkt in den Rückführ-Unterabschnitt 27. Nur ein geringer, praktisch vernachlässigbarer Anteil der Umluft strömt bei geöffneter Drosselklappe 24 vom Zuführ-Unterabschnitt 14 durch die Durchgangsöffnungen 46 über den Backraum 18 und die Verbindungsöffnungen 33a hin zum Rückführ-Unterabschnitt 27. Bei geschlossener Drosselklappe 24 ist die Strömungsgeschwindigkeit der Umluft durch die Durchgangsöffnungen 46 zum Beispiel 20 mal so groß wie bei geöffneter Drosselklappe 24.

Der obere Zuführ-Unterabschnitt 14 weist vier Befestigungsausleger 47 zur schwimmenden Montage im Zonenendmodul 4 auf.

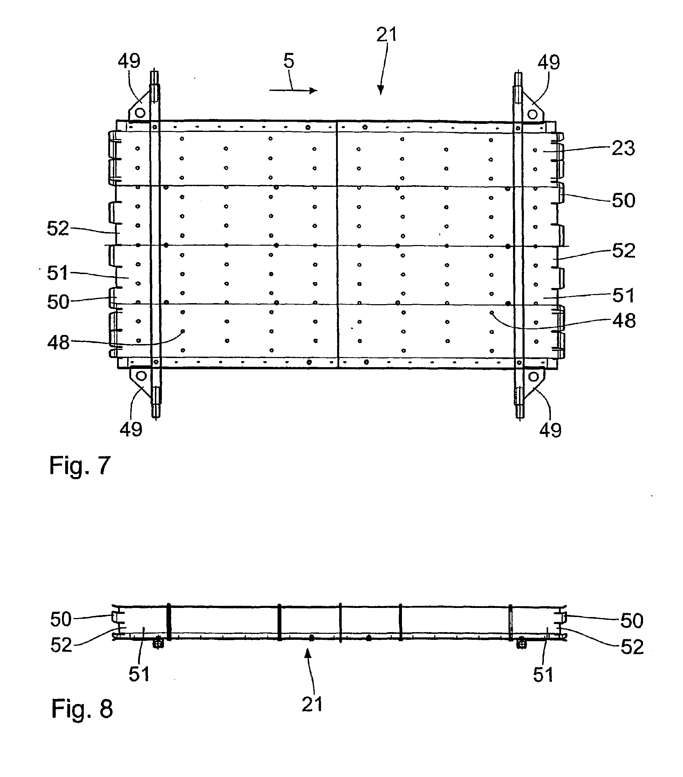

Fig. 7 zeigt eine Ansicht des Zuführ-Unterabschnitts 21 des unteren Zuführ-Kanalabschnitts 20 des Zonenendmoduls 4, vom Backraum her gesehen. Die Grenzwand 23 , über die der Zuführ-Unterabschnitt 21 an den Backraum 18 angrenzt, weist eine Vielzahl rasterartig angeordneter weiterer Durchgangsöffnungen 48 auf. Die Rasterweite der Anordnung der Durchgangsöffnungen 48 längs der Förderrichtung 5 ist beim unteren Zuführ-Unterabschnitt 21 in etwa doppelt so groß wie die Rasterweite der Durchgangsöffnungen 46 beim oberen Zuführ-Unterabschnitt 14 nach Fig. 5. Auch der Strömungswiderstand aller Durchgangsöffnungen 48 zusammen ist größer als der minimale Strömungswiderstand des Führungskanals 9 im Bereich der Verbindungs-Kanalabschnitte 32, der durch die Drosselklappen 33 in der Offenstellung freigegeben werden kann. Hierdurch ist gewährleistet, dass bei geöffneten Drosselklappen 33 die Umluft praktisch ausschließlich direkt vom unteren Zuführ-Unterabschnitt 21 über die Verbindungs-Kanalabschnitte 32 in die Rückführ-Unterabschnitte 27 strömt. Nur ein praktisch vernachlässigbarer Teil der Umluft nimmt bei geöffneten Drosselklappen 33 den Umweg vom unteren Zuführ-Unterabschnitt 21 über die Durchgangsöffnungen 48, den Backraum 18 und die Verbindungsöffnungen 33a in den Rückführ-Unterabschnitt 27. Der untere Zuführ-Unterabschnitt 21 weist vier Befestigungsausleger 49 zur schwimmenden Montage im Zonenendmodul 4 auf.

Die Durchgangsöffnungen 46, 48 haben die Funktion von Luftdüsen zur wahlweisen Zufuhr von Umluft 8 hin zum Backraum 18. Die Zuführ-Kanalabschnitte 13, 20 werden daher auch als Düsenkästen bezeichnet.

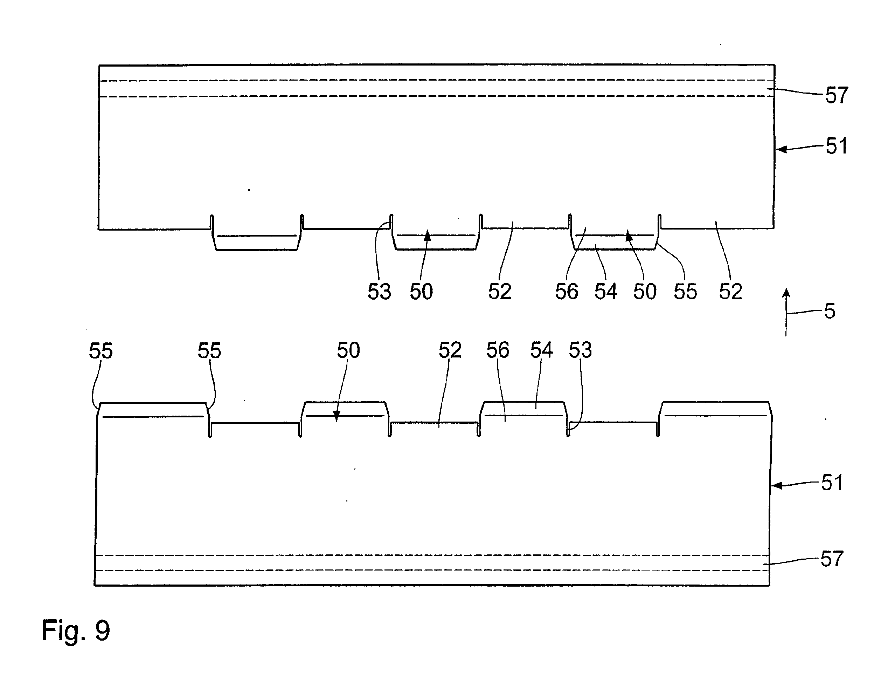

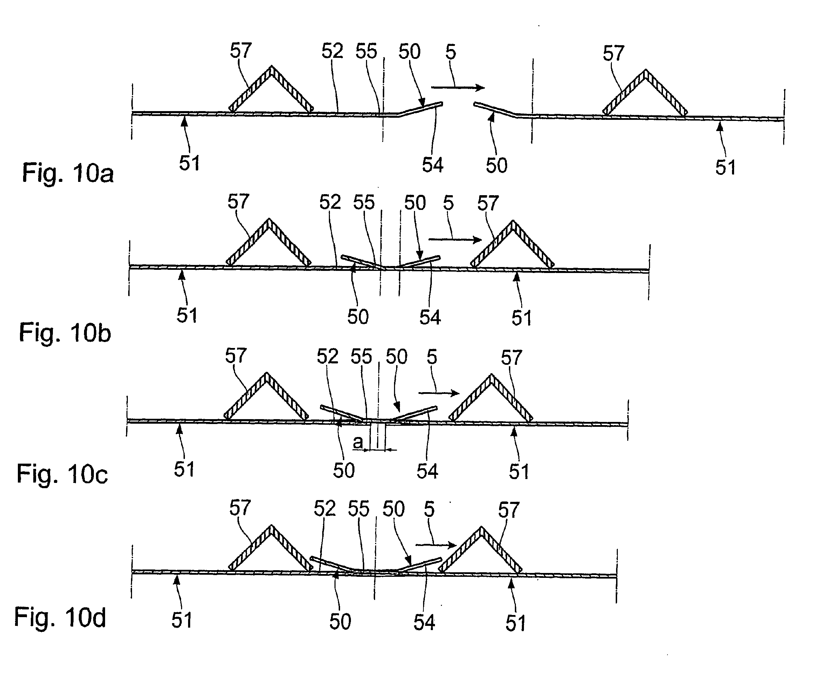

Die zwischen den Ofenmodulen 2 bis 4 stirnseitig aneinander angrenzenden Endbereiche der modulweise unterteilten Kanalabschnitte 13, 20 sind über Verbindungseinrichtungen miteinander verbunden, die jeweils eine Mehrzahl von stirnseitig über die Kanalabschnitte 13, 20 überstehende Verbindungslaschen 50 aufweisen. Diese Verbindungseinrichtungen sind für die Kanalabschnitte 13, 20 in gleicher Weise ausgebildet und werden nachfolgend anhand der Fig. 9 und 10 näher erläutert.

Die Verbindungslaschen 50 sind umlaufend um stirnseitige Endbereiche 51 der Kanalabschnitte 13, 20 angeordnet. Zwischen jeweils zwei benachbarten Verbindungslaschen 50 erstreckt sich eine Aufnahmezone 52. Die Verbindungslaschen 50 und die Aufnahmezonen 52 sind bei miteinander zu verbindenden Endbereichen 51 derart versetzt gegenüberstehend angeordnet, dass jeweils einer Verbindungslasche 50 des einen Endbereichs 51 eine Aufnahmezone 52 des anderen Endbereichs 51 zugeordnet ist. Die einander zugeordneten Verbindungslaschen 50 und Aufnahmezonen 52 weisen die gleiche Breite auf. Zwischen jeweils einer Verbindungslasche 50 und einer dieser benachbarten Aufnahmezone 52 ist im Endbereich 51 eine Führungs- und Verbindungsnut 53 ausgeführt. Die Führungsnuten 53 erstrecken sich längs der Förderrichtung 5. Jede Verbindungslasche 50 weist an ihrem freien Ende einen Führungsabschnitt 54 auf. Letzterer ist zum benachbarten Endbereich 51 und auch zur zugeordneten Aufnahmezone 52 schrägstehend angeordnet, wie sich zum Beispiel aus der Darstellung nach Fig. 10 ergibt. Der Führungsabschnitt 54 schließt mit der Wand des benachbarten Endbereichs 51 einen Winkel von etwa 165° ein.
Die Führungsabschnitte 54 verjüngen sich zum freien Ende der Verbindungslaschen 50 hin über schräge Kantenbereiche 55. An den Führungsabschnitt 54 schließt sich in Richtung auf den Endbereich 51 zu ein Klemmabschnitt 56 der Verbindungslasche 50 an. Wie der Fig. 10 zu entnehmen ist, weist jeder der Endbereiche 51 ein Querversteifungsprofil 57 mit dreieckigem Querschnitt auf.

Stellvertretend für die Montage der Kanalabschnitte 13, 20 beim Zusammensetzen zweier Ofenmodule 2 bis 4 wird nachfolgend die Verbindung zweier Endbereiche 51 anhand der vier Momentanpositionen a bis d der Fig. 10 beschrieben.

Fig. 10a zeigt die einander stirnseitig gegenüberliegenden Endbereiche 51 vor der eigentlichen Verbindung der die beiden Endbereiche 51 aufweisenden Module 2 bis 4 in einer Momentanposition, bei der diese in Förderrichtung 5 noch zueinander beabstandet sind. Jeder Verbindungslasche 50 des einen Endbereichs 51 ist eine Aufnahmezone 52 des anderen Endbereichs 51 zugeordnet.

Fig. 10b zeigt eine Momentanposition, bei der die Endbereiche 51 parallel zur Förderrichtung 5 aufeinander zu derart verlagert wurden, dass die Verbindungslaschen 50 in die ihnen zugeordneten Aufnahmezonen 52 eingreifen. Aufgrund der schräg angestellten Führungsabschnitte 54 ist gewährleistet, dass die Verbindungslaschen 50 wechselweise sich ineinander verschränkend in die jeweiligen Aufnahmezonen 52 eingreifen. Zu Beginn dieses Eingreifvorgangs ist aufgrund der genannten Schrägstellung und der schrägen Kantenabschnitte 55 der Führungsabschnitte 54 eine gewisse Versatztoleranz zwischen den Endbereichen 51 quer zur Förderrichtung 5 gewährleistet.

Fig. 10c zeigt eine Momentanposition, bei der die Endbereiche 51 parallel zur Förderrichtung 5 noch ein Stück weiter aufeinander zu geschoben wurden. Dabei werden die Klemmabschnitte 56 an den führenden Stirnkanten der Aufnahmezonen 52 vorbei gedrückt, so dass die Verbindungslaschen 50 elastisch nach oben und die Aufnahmezonen 52 elastisch nach unten ausgelenkt werden. Hierdurch ergibt sich ein sicherer Zusammenhalt der beiden Endbereiche 51. Zwischen den Enden der einander zugewandten Führungs- und Verbindungsnuten 53 verbleibt in der Momentanposition nach Fig. 10c ein Abstand, der in Fig. 10c mit a bezeichnet ist. Dies ist die Momentanposition nach der Montage der Ofenmodule 2 bis 4, solange der Backofen 1 noch nicht aufgeheizt ist.

Fig. 10d zeigt die einander angrenzenden Endbereiche 51 beim Betrieb des Backofens 1, bei dem die Endbereiche 51 durch die heiße Umluft 8 erwärmt wurden. Aufgrund der thermischen Ausdehnung der zugehörigen Zuführ-Kanalabschnitte haben sich die Endbereiche 51 in der Momentanposition nach Fig. 10d gegenüber derjenigen nach Fig. 10c aufeinander zu bewegt. Der Abstand a zwischen den Enden der Führungs- und Verbindungsnuten 53 hat sich praktisch bis auf Null verringert.

Die Abfolge der Verbindungslaschen 50 und Aufnahmezonen 52 beim stirnseitigen Umlauf um einen jeweiligen Endbereich 51 eines Kanalabschnitts 13, 20 ist derart in Bezug auf die Förderrichtung 5 asymmetrisch, dass ein Ofenmodul 2 bis 4 an einem anderen Ofenmodul 2 bis 4 in einer bestimmten Orientierung oder auch in einer hierzu alternativen Orientierung, bei der das Ofenmodul 2 bis 4 um seine Hochachse um 180° gedreht wurde, passend angesetzt werden kann. Gleichzeitig ist die Abfolge der Verbindungslaschen 50 und Aufnahmezonen 52 so, dass der Backofen 1 mit beliebiger Abfolge von Ofenmodulen 2 bis 4 aufgebaut werden kann.

Der Backofen 1 wird aus den Ofenmodulen 2 bis 4 je nach dem Temperatur- und Backzeitanforderungen, die an das jeweils z. B. zu verarbeitende Dauerbackgebäck gestellt sind, zusammengesetzt. Dies ist anhand der Abfolge der Fig. 10a bis 10d beschrieben. Beim Zusammenfügen der einander zugewandten Stirnwände der Ofenmodule 2 bis 4, deren Tragstrukturen über entsprechende Verbindungselemente, z. B. Schraubflansche, miteinander verbunden werden, finden sich aufgrund der beschriebenen Anordnung und Ausformung der Verbindungslaschen 50 die einander zugewandten Endbereiche 51 der jeweiligen Zuführ-Unterabschnitte 14, 21 automatisch. Die Endbereiche 51 müssen daher nicht in einem zusätzlichen Arbeitsgang miteinander verbunden werden. Für die Verbindung der jeweiligen Kanalabschnitte des Führungskanals 9 sind keine extra zu montierenden Verbindungsteile erforderlich. Nach der Montage der Ofenmodule 2 bis 4 wird der Backofen 1 in einer Weise betrieben, die nachfolgend anhand des Backofens nach den Fig. 2 und 3 beschrieben wird:

Zunächst wird der Backofen in einem Strahlungs-Modus in der in Fig. 2 dargestellten Momentanposition betrieben. Die Drosselklappen 24 und 33 sind vollständig offen, so dass die vom Umwälzventilator 30 umgewälzte Umluft 8 im Wesentlichen ungehindert im Führungskanal 9 umlaufen kann. Dabei strömt die Umluft 8 vom Brennerbereich des Führungskanals 9 zunächst in die Zuführ-Kanalabschnitte 13 und 20 und von dort zurück in den Rückführ-Kanalabschnitt 26, wobei je nach dem Weg der Umluft 8 eine der Drosselklappen 24, 33 passiert wird.

Durchgangsöffnungen durch die Grenzwände 17, 23, welche die Zuführ-Kanalabschnitte 13, 20 mit dem Backraum verbinden, werden nicht nur durch die Durchgangsöffnungen 46, 48 gebildet, sondern auch durch Durchgangs-Zwischenräume im Bereich der über die beschriebene Verbindungseinrichtung aneinander anstoßenden Endbereiche 51. Der Gesamtquerschnitt dieser Durchgangs-Zwischenräume fällt gegenüber dem Gesamtquerschnitt der Durchgangsöffnungen 46, 48 jedoch nicht nennenswert ins Gewicht. Mit zunehmender Temperatur der Endbereiche 51 verkleinert sich zudem der Querschnitt dieser Durchgangs-Zwischenräume praktisch bis nahe Null.

Da die Drosselklappen 24, 33 in der Offenstellung im Führungskanal 9 einen maximalen Querschnitt freigegeben, der größer ist als die Summe der Querschnitte der Durchgangsöffnungen 46 und 48, tritt kaum oder nur wenig Umluft 8 durch die Durchgangsöffnungen 46, 48 in den Backraum ein. Eine Erwärmung des Backraums 8 findet daher fast ausschließlich durch Wärmestrahlung, ausgehend von den heißen Grenzwänden 17, 23, statt. Das im Backraum 18 vorliegende Backgut kann im Strahlungs-Modus des Backofens 1 schonend vorgebacken werden.

Wenn anschließend die Drosselklappen 24, 33 geschlossen werden, befindet sich der Backofen 1 im Konvektions-Modus, der in Fig. 3 dargestellt ist. Die Zuführ-Kanalabschnitte 13, 20 sind dann im Bereich der Drosselklappen 24, 33 verschlossen. Die Umluft 8 nimmt dann einen anderen Weg, nämlich über die Durchgangsöffnungen 46, 48, die Verbindungs-Kanalabschnitte 32 und den Rückführ-Kanalabschnitt 26.

Das auf dem Backband 35 vorliegende Backgut wird dann überwiegend über die am Backgut vorbeistreichende Umluft 8, also durch Konvektion, beheizt. Das Backgut kann dann ausgebacken werden.

Auch Zwischenmodi zwischen dem Strahlungs- und dem Konvektions-Modus können durch entsprechende Zwischenstellungen der Drosselklappen 24 und 33 zwischen der Offen- und der Schließstellung eingestellt werden. In diesen Zwischenmodi liegt eine gegenüber dem Konvektions-Modus entsprechend verringerte Umluft-Strömung durch die Durchgangsöffnungen 46, 48 und damit ein geringerer Konvektionsanteil des Backofens 1 vor.

Die Drosselklappen 24, 33 können auch unabhängig voneinander geöffnet bzw. geschlossen werden. Wenn die Drosselklappen 24 geöffnet und die Drosselklappen 33 geschlossen sind, findet ein Backvorgang mit Strahlungs-Oberhitze und zusätzlich von unten, also durch die Durchgangsöffnungen 48, kommender Konvektion statt. Umgekehrt können auch die Drosselklappen 24 geschlossen und die Drosselklappen 33 geöffnet sein, so dass Strahlungs-Unterhitze mit Konvektion von oben verbunden ist. Diese verschiedenen Betriebsmodi können zwischen den einzelnen Ofenmodulen 2 bis 4 eines Backofens 1 unterschiedlich gewählt werden. So ist es möglich, die längs der Förderrichtung 5 führenden Ofenmodule 2 bis 4 im Strahlungs-Modus und die nachfolgenden im Konvektions-Modus zu betreiben. Auch ein sanfter Übergang zwischen Ofenmodulen im Strahlungs-Modus und Ofenmodulen im Konvektions-Modus ist möglich, indem zwischenliegende Ofenmodule in Zwischenmodi zwischen dem Strahlungs- und dem Konvektions-Modus betrieben werden. Auch andere Abfolgen der Modi der Ofenmodule 2 bis 4 längs der Förderrichtung 5 sind möglich.

Zusätzlich kann über die mit den Verbindungsöffnungen 33a zusammenwirkenden Schieber die Strömung von Umluft vom Backraum 18 zum Rückführ-Kanalabschnitt 26 beeinflusst werden. Hierdurch kann beispielsweise die Konvektion im Backraum 18 weiter unterdrückt werden. Auch Backschwaden, die mit einer nicht dargestellten Beschwadungseinrichtung des Backofens 1 erzeugt werden, können durch Verschließen der Verbindungsöffnungen 33a mit Hilfe der Schieber im Backraum 18 gehalten werden.

Bei einer nicht dargestellten Variante des Backofens 1 können, z. B. mit Hilfe entsprechender Schieber, auch die Durchgangsöffnungen 46, 48 wahlweise zum Teil oder gänzlich verschlossen werden. Auch hierdurch kann die Konvektion im Backofen weiter verringert und der Ober/Unterhitzeanteil beeinflusst werden.

Anstelle eines zwischengeschalteten Wärmetauschers 31 kann die Umluft 8 durch den Brenner 7 auch direkt beheizt werden.

## Patentansprüche

1. Backofen
- mit einer Heizquelle (7) zur Erzeugung von Umluft (8),
- mit einem Führungskanal (9), welcher eine Mehrzahl von rohrförmigen Kanalabschnitten (13, 20, 26) umfasst, zur Umluftführung von der Heizquelle (7) hin zu einem Backraum (18), wobei stirnseitig aneinander angrenzende Endbereiche (51) zweier Kanalabschnitte (13, 20) miteinander über eine Verbindungseinrichtung verbunden sind,
**dadurch gekennzeichnet, dass**
-- die Endbereiche (51) der beiden Kanalabschnitte (13, 20) jeweils eine Mehrzahl von stirnseitig über den Kanalabschnitt (13, 20) überstehenden Verbindungslaschen (50) aufweisen, die jeweils durch Aufnahmezonen (52) voneinander beabstandet umlaufend um die Endbereiche (51) angeordnet sind,
-- die Anordnung der Verbindungslaschen (50) einerseits und der Aufnahmezonen (52) andererseits derart ist, dass bei miteinander verbundenen Endbereichen (51) die Verbindungslaschen (50) des einen Kanalabschnitts (13, 20, 26) in die Aufnahmezonen (52) des anderen Kanalabschnitts (13, 20, 26) eingreifen und umgekehrt;
-- das freie Ende mindestens einer der Verbindungslaschen (50) als Führungsabschnitt (54) ausgebildet ist, der derart schräg stehend zum benachbarten Abschnitt des hieran angrenzenden Endbereichs (51) ausgestaltet ist, dass die Aufnahmezone (52) des anderen Kanalabschnitts (13, 20), welche dieser Verbindungslasche (50) bei miteinander verbundenen Endbereichen (51) zugeordnet ist, beim Herstellen der Verbindung zwischen den Endbereichen (51) vom Führungsabschnitt (54) geführt ist, und die aneinander angrenzenden, die Endbereiche (51) der Kanalabschnitte (13, 20) sich beim Betrieb des Backofens (1) aufgrund der thermischen Ausdehnung der Kanalabschnitte (13, 20) aufeinander zu bewegen, und
-- zwischen einer Verbindungslasche (50) und den hieran angrenzenden Aufnahmezonen (52) eines Kanalabschnitts (13, 20) jeweils eine Führungs- und Verbindungsnut (53) ausgebildet ist, in die eine entsprechende Führungs- und Verbindungsnut (53) des anderen Kanalabschnitts (13, 20) bei miteinander verbundenen Endbereichen (51) eingreift, und wobei
die Dimensionierung der Führungs- und Verbindungsnuten (53) eine Temperaturausdehnung der Kanalabschnitte (13, 20) im Bereich der stirnseitig aneinander angrenzenden Endbereiche (51) aufnimmt.

2. Backofen nach Anspruch 1, **dadurch gekennzeichnet, dass** sich bei mindestens einer der Verbindungslaschen (50) an den Führungsabschnitt (54) hin zum Endbereich (51) ein Klemmabschnitt (56) anschließt, der derart ausgestaltet ist, dass die Aufnahmezone (52) des anderen Kanalabschnitts (13, 20), welche dieser Verbindungslasche (50) bei miteinander verbundenen Endbereichen (51) zugeordnet ist, zum Herstellen der Verbindung zwischen den Endbereichen (51) an dem Klemmabschnitt (56) klemmend anliegt.

3. Backofen nach Anspruch 1 oder 2, **dadurch gekennzeichnet, dass** das freie Ende mindestens einer der Verbindungslaschen (50) als sich zum freien Ende hin verjüngender Führungsabschnitt (54) ausgebildet ist.

4. Backofen nach einem der Ansprüche 1 bis 3, **dadurch gekennzeichnet, dass** solange der Backofen (1) noch nicht aufgeheizt ist, zwischen den Enden der einander zugewandten Führungs- und Verbindungsnuten (53) ein Abstand (a) verbleibt.

5. Backofen nach einem der Ansprüche 1 bis 4, **dadurch gekennzeichnet, dass** Bereiche jeweils eines Kanalabschnitts (13, 20, 26) Teil eines Ofenmoduls (2 bis 4) sind, wobei eine Mehrzahl von miteinander verbundenen Ofenmodulen (2 bis 4) den Backofen aufbauen.

6. Backofen nach Anspruch 5, **dadurch gekennzeichnet, dass** die Verbindungseinrichtung eine Verbindungseinheit zur Festlegung zueinander benachbarter Ofenmodule (2 bis 4) aufweist.

7. Backofen nach Anspruch 5 oder 6, **gekennzeichnet durch** eine Anordnung der Verbindungslaschen (50) und der Aufnahmezonen (52) derart, dass ein Ofenmodul (2 bis 4) über die Verbindungseinrichtung mit einem zweiten Ofenmodul (2 bis 4) in einer vorgegebenen ersten Orientierung und gleichzeitig mit diesem auch in einer zweiten, um 180° hierzu verdrehten Orientierung verbunden werden kann.

## Claims

1. Baking oven comprising
- a heating source (7) for producing circulating hot air (8);
- a guide channel (9) comprising a plurality of tube-shaped channel portions (13, 20, 26) for guiding the circulating hot air (8) from the heating source (7) to a baking chamber (8), wherein end regions (51) of two channel portions (13, 20) are interconnected by a connection device, the end regions (51) abutting each other at their front sides, **characterised in that**
-- the end regions (51) of the two channel portions (13, 20) comprise in each case a plurality of connection lugs (50) projecting beyond the front side of the channel portion (13, 20), the connection lugs (50) being arranged around the periphery of the end regions (51) at a distance from each other which is in each case defined by accommodation zones (52);
-- the arrangement of the connection lugs (50) on the one hand and of the accommodation zones (52) on the other is such that when the end regions (51) are interconnected, the connection lugs (50) of the one channel portion (13, 20, 26) engage into the accommodation zones (52) of the other channel portion (13, 20, 26) and vice versa;
-- the free end of at least one of the connection lugs (50) is designed as a guide portion (54) which is arranged at an angle relative to the adjacent portion of the abutting end region (51) in such a way that the accommodation zone (52) of the other channel portion (13, 20), which is allocated to this connection lug (50) when the end regions (51) are interconnected, is guided between the end regions (51) by means of the guide portion (54) when establishing the connection, and the abutting end regions (51) of the channel portions (13, 20) move toward each other due to the thermal expansion of the channel portions (13, 20) during operation of the baking oven (1); and
-- in each case one guide and connection groove (53) is formed between a connection lug (50) and the adjoining accommodation zones (52) of a channel portion (13, 20), with a corresponding guide and connection groove (53) of the other channel portion (13, 20) engaging into said guide and connection groove (53) when the end regions (51) are interconnected, and with the dimensioning of the guide and connection grooves (53) accommodating a thermal expansion of the channel portions (13, 20) in the region of the end regions (51) abutting each other at their front ends.

2. Baking oven according to claim 1, **characterised in that** the guide portion (54) of at least one of the connection lugs (50) is adjoined in the direction of the end region (51) by a clamping portion (56) which is designed such that the accommodation zone (52) of the other channel portion (13, 20), which is allocated to this connection lug (50) when the end regions (51) are interconnected, abuts the clamping portion (65) in a clamping fashion so as to establish the connection between the end regions (51).

3. Baking oven according to claim 1 or 2, **characterised in that** the free end of at least one of the guide lugs (50) is designed as a guide portion (54) which tapers towards the free end.

4. Baking oven according to any one of claims 1 to 3, **characterised in that** there is a distance (a) between the ends of the facing guide and connection grooves (53) as long as the baking oven (1) is not yet heated up.

5. Baking oven according to any one of claims 1 to 4, **characterised in that** regions of in each case one channel portion (13, 20, 26) are part of an oven module (2 to 4), with a plurality of interconnected oven modules (2 to 4) constituting the baking oven.

6. Baking oven according to claim 5, **characterised in that** the connection device comprises a connection unit for positioning adjacent oven modules (2 to 4).

7. Baking oven according to claim 5 or 6, **characterised by** an arrangement of the connection lugs (50) and the accommodation zones (52) such that an oven module (2 to 4) may be connected, by means of the connection device, to a second oven module (2 to 4) in a predetermined first orientation and at the same time in a second orientation rotated through 180° with respect to said first orientation.

## Revendications

1. Four
- comportant une source de chauffage (7) destinée à produire une circulation d'air (8),
- comportant un canal de guidage (9), qui comporte une pluralité de tronçons (13, 20, 26) tubulaires, pour le guidage de la circulation d'air depuis la source de chauffage (7) vers une chambre de cuisson (18), des zones d'extrémité (51) de deux tronçons (13, 20) du canal de guidage, adjacentes par leur côté frontal, étant reliées l'une à l'autre par un dispositif d'assemblage,
**caractérisé en ce que**
-- les zones d'extrémité (51) des deux tronçons (13, 20) du canal de guidage comportent respectivement une pluralité de pattes d'assemblage (50), qui sont en saillie du côté frontal au-delà du tronçon (13, 20) du canal de guidage et qui sont disposées sur la périphérie des zones d'extrémité (51) en étant écartées les unes des autres par des zones de réception (52),
-- les pattes d'assemblage (50), d'une part, et les zones de réception (52), d'autre part, sont agencées de telle sorte que, lorsque les zones d'extrémité (51) sont reliées l'une à l'autre, les pattes d'assemblage (50) de l'un des tronçons (13, 20, 26) du canal de guidage s'engagent dans les zones de réception (52) de l'autre tronçon (13, 20, 26) du canal de guidage, et inversement ;
-- l'extrémité libre d'au moins une des pattes d'assemblage (50) est réalisée sous forme de partie de guidage (54), qui est inclinée par rapport à la partie adjacente de la zone d'extrémité (51) adjacente à ladite extrémité, de telle sorte que la zone de réception (52) de l'autre tronçon (13, 20) du canal de guidage, laquelle est associée à ladite patte d'assemblage (50) lorsque les zones d'extrémité (51) sont reliées l'une à l'autre, est guidée par la partie de guidage (54) au moment de la réalisation de l'assemblage entre les zones d'extrémité (51), et les zones d'extrémité adjacentes des tronçons (13, 20) du canal de guidage se déplacent l'une vers l'autre en cours de service du four, sous l'effet de la dilatation thermique des tronçons (13, 20) du canal de guidage, et
-- entre une patte d'assemblage (50) et les zones de réception (52), adjacentes à celle-ci, sur un tronçon (13, 20) du canal de guidage, est réalisée respectivement une rainure de guidage et d'assemblage (53), dans laquelle s'engage une rainure de guidage et d'assemblage (53) sur l'autre tronçon (13, 20) du canal de guidage lorsque les zones d'extrémité (51) sont reliées l'une à l'autre, et la rainure de guidage et d'assemblage (53) étant dimensionnée pour absorber une dilatation thermique des tronçons (13, 20) du canal de guidage au niveau des zones d'extrémité (51) adjacentes l'une à l'autre par leur côté frontal.

2. Four selon la revendication 1, **caractérisé en ce que**, sur au moins une des pattes d'assemblage (50), une partie de serrage (56) prolonge la partie de guidage (54) vers la zone d'extrémité (51) et est réalisée de telle sorte que la zone de réception (52) de l'autre tronçon (13, 20) du canal de guidage, laquelle est associée à ladite patte d'assemblage (50) lorsque les zones d'extrémité (51) sont reliées l'une à l'autre, est en appui bloqué contre la partie de serrage (56) en vue de réaliser l'assemblage entre les zones d'extrémité (51).

3. Four selon la revendication 1 ou 2, **caractérisé en ce que** l'extrémité libre d'au moins une des pattes d'assemblage (50) est réalisée sous la forme d'une partie de guidage (54) qui se rétrécit vers l'extrémité libre.

4. Four selon l'une quelconque des revendications 1 à 3, **caractérisé en ce que**, tant que le four (1) n'est pas encore chauffé, il subsiste un écartement (a) entre les extrémités des rainures de guidage et d'assemblage (53) orientées les unes vers les autres.

5. Four selon l'une quelconque des revendications 1 à 4, **caractérisé en ce que** les zones de chacun des tronçons (13, 20) du canal de guidage font partie d'un module de four (2 à 4), une pluralité de modules de four (2 à 4), reliés entre eux, formant le four.

6. Four selon la revendication 5, **caractérisé en ce que** le dispositif d'assemblage comporte une unité d'assemblage destinée à immobiliser les modules de four (2 à 4) adjacents entre eux.

7. Four selon la revendication 5 ou 6, **caractérisé en ce que** les pattes d'assemblage (50) et les zones de réception (52) sont agencées de telle sorte qu'un module de four (2 à 4) peut être assemblé par l'intermédiaire du dispositif d'assemblage à un deuxième module de four (2 à 4) dans une première orientation prédéfinie et, simultanément avec celle-ci, également dans une deuxième orientation tournée de 180° par rapport à la première orientation.
